# EUROPEAN PATENT APPLICATION

(11) **EP 0 555 028 A2**
(43) Date of publication of application: **11.08.1993**
(21) Application number: 93300690.0
(22) Date of filing: 29.01.1993
(51) Int. Cl.: G06F 15/72, G06F 15/403

(54) **An apparatus and method for manipulating digital data relating to motion video images**

(30) Priority: 06.02.1992 JP 21443/92
(71) Applicant: International Business Machines Corporation, Armonk, N.Y. 10504 (US)
(72) Inventor: Hong, Jung-Kook, Tokyo (JP); Kaneko, Toyohisa, Yokohama-shi (JP); Takahashi, Junichi, Tokyo (JP)
(74) Representative: Burt, Roger James, Dr.

(57) **Abstract**

The present invention provides an apparatus and method for manipulating digital data relating to motion video images, in which motion video image information is used to manage and retrieve a motion video image. A whole motion video image R is hierarchically divided into frame sequences A, A1, A11 ... of shorter time according to the construction and the semantic contents thereof, and logical frame structure data (10, 13, 15, 16, 17) representing the hierarchical relationship of the frame sequences, attribute data At of the frame sequences, and still video images rf of representative frames are generated; these are associated with each other to create a data file. Retrieval of a motion video image is performed by extracting frame sequences using the attribute data and logical frame structure as retrieval keys for the data file of the motion video image information, and by confirming the contents using the still video image rf of the representative frames. By this approach any scene can be randomly accessed and associated scenes can also be retrieved easily, and thus a motion video image of interest can quickly be retrieved from a long sequence of motion video images.

## Description

The present invention relates to an apparatus and method for manipulating digital data relating to motion video images stored in a recording medium.

With the increase in availability of video equipment for use with recording media having motion video images recorded therein (for instance, laser disk, VTR and 8mm-video), the amount of video images accumulated in museums and homes as well as in specialized fields such as radio stations and advertising agencies has been increasing remarkably. The accumulated video images are not only reproduced, but are also often reused to create new video images by editing. As the amount of video images stored has increased, it has become increasingly necessary to have a method for managing motion video images that can efficiently locate video scenes of interest from a recording medium for reproduction and editing. There is a similar situation in the field of movies, which deals with video films.

In conventional systems for managing motion video images, frame numbers are stored in a recording medium such as a personal computer, and retrieval is performed by a user specifying the stored frame numbers. For instance, the personal computer stores frame numbers in a recording medium. The user can then directly specify a frame number or frame time from an alphanumeric input device, or alternatively the personal computer displays the still video images of frames having stored frame numbers on a display and the user selects them, thereby specifying the start frame for reproduction. The personal computer will then produce video images on a TV monitor from the specified start frame while controlling the functions provided in the videoplayer, such as frame feed, fast forward and rewind. Thus, conventional systems adopt a method in which video images to be retrieved are directly accessed by means of frame numbers and the like.

Based on such a system for managing motion video images, in Takafumi Miyatake, "Interactive Natural Motion Video Image Editing Technique", FRIEND21 3rd Results Announcement Convention, July 18, 19, 1991, a technique is shown in which motion video images are divided into scenes, and the video images of the leading frames of the respective scenes are displayed on a display to roughly display the scenes to be edited. However, when a long sequence of motion video images is to be edited, if for instance, scene change occurs at a frequency of the order of once every two seconds on average, the number of scenes increases, and thus it is difficult to go through all the scenes efficiently. In addition, since the divided scenes constitute direct units of retrieval, it is not possible to retrieve them while grasping the whole structure of the motion video images, since the semantic construction of the scenes becomes complicated.

On the other hand, in the information retrieval system shown in Published Unexamined Patent Application No. 29939/1986, a technique is disclosed in which motion video images are hierarchically classified and still video images representative of the classification are hierarchically displayed as a menu for selection by a user. However, the classification hierarchy must be sequentially traversed from the highest level to the lowest level before motion video images are displayed, and thus retrieval becomes inefficient as the menu hierarchy becomes deeper. Furthermore, the menu hierarchy is fixed and no data management technique is shown for modification.

It is the object of this invention to provide an apparatus and method for manipulating digital data relating to motion video images, which enables a scene of interest to be quickly retrieved from a long sequence of motion video images stored in a recording medium.

Accordingly the present invention provides apparatus for manipulating digital data relating to motion video images, the apparatus comprising storage means for storing the motion video images, means for reproducing the motion video images, and a digital data processing system having a motion video image information generating portion and an image retrieval portion; the data processing system being characterised in that the information generating portion comprises: scene change detector for receiving a digital representation of a motion video image as a series of frames and for detecting the frames at which changes in scenes occur so as to arrange the individual frames of said motion video image into frame sequences; logical frame structure creating means for determining the start and end frames of each frame sequence from the output of said scene change detector, and for creating a logical frame structure containing digital data relating to the frame sequences; a first digital data store for storing the logical frame structure in conjunction with attribute information; representative frame creating means for determining, for each frame sequence, a representative frame of that frame sequence, and for retrieving the still video image data of the representative frame from the storage means; and a second digital data store for storing the still video image data in digital form.

Viewed from a second aspect the present invention provides a method of manipulating digital data relating to motion video images in an apparatus comprising storage means for storing the motion video images, means for reproducing the motion video images, and a digital data processing system; the method comprising the steps of:
(a) entering a digital representation of the motion video image as a series of frames into the data processing system;
(b) detecting the frames at which changes in scenes occur so as to arrange the individual frames of said motion video image into frame sequences;
(c) determining the start and end frames of each frame sequence from the output of said detecting step;
(d) creating a logical frame structure containing digital data relating to the frame sequences;
(e) storing the logical frame structure in conjunction with attribute information;
(f) determining, for each frame sequence, a representative frame of that frame sequence;
(g) retrieving the still video image data of the representative frame from storage means; and
(h) storing the still video image data in digital form.

Preferably the individual frames of the motion video image are organized into a plurality of frame sequences according to physical or semantic changes in the motion video image, and then motion video image information for retrieving each frame sequence is created.

The motion video image information includes a logical frame structure describing the logical structure of the individual frame sequences, the still video image data of the frames representative of the individual frame sequences, and attribute data acting as retrieval items of the individual frame sequences.

The use of the motion video image information for motion video image retrieval allows random access to any scene and facilitates retrieval of the associated scenes, and thus a motion video image of interest can quickly be retrieved from long sequences of motion video images.

The present invention will be described further, by way of example only, with reference to an embodiment thereof as illustrated in the accompanying drawings in which:
Figure 1 is an illustration showing an example of the concept of motion video image management (bottom-up) in accordance with the preferred embodiment of the present invention;
Figure 2 is an illustration showing another example of the concept of motion video image management (top-down) in accordance with the preferred embodiment;
Figure 3 is a diagram showing the configuration of the motion video image managing system according to a preferred embodiment of this invention;
Figure 4 is a flowchart showing an example of the procedure for creating retrieval information according to the system of Figure 3;
Figure 5 is an illustration showing an example of the logical structure of frame sequences;
Figure 6 is an explanatory view showing the structure of the files accumulated as retrieval information;
Figure 7 is an illustration explaining the operation for editing and creating a logical frame structure;
Figure 8 is an illustration explaining a change in the logical frame structure and its effects;
Figure 9 is an illustration explaining a change in the representative frames and its effects;
Figure 10 is a flowchart showing an example procedure of the retrieval process by the system of Figure 3;
Figure 11 is an illustration showing an example of the screen format used for specifying retrieval conditions in the retrieval process;
Figure 12 is an illustration showing an example of the representative frame list screen in the retrieval process;
Figure 13 is an illustration showing an example of the screen format for displaying the attribute data of frame sequences in the retrieval process; and
Figure 14 is an illustration showing an example of the screen format used for selecting a retrieval operation along the logical frame structure in the retrieval process.

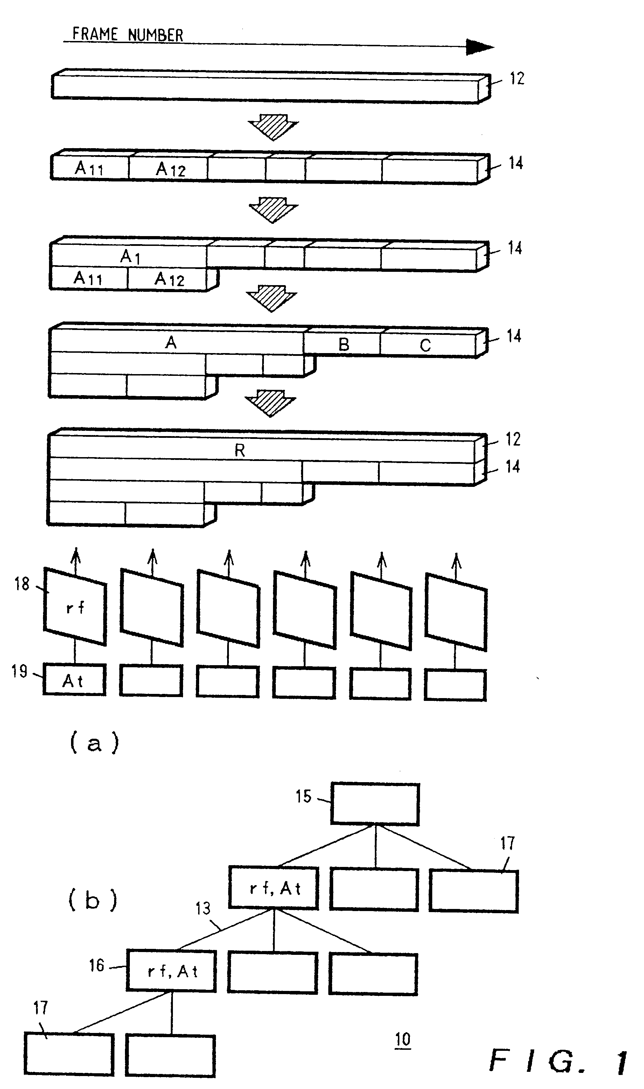

Figure 1 illustrates the concept of motion video image management using motion video image information in accordance with the preferred embodiment of the present invention. Motion video image 12 comprising many (for instance, 30 per second) frames f1 to fn is divided into a plurality of frame sequences 14, shorter in time than the original motion video image, by physical changes such as cut or camera angle or semantic change of frames, as shown in (a) of the figure. Division of individual frame sequences 14 are relative and arbitrary. For instance, one frame sequence can be divided into groups of frame sequences of shorter time, and conversely, a plurality of continuous frame sequences can be merged and recognized to be a frame sequence of a higher level in semantics. In order to describe the logical structure of the frame sequences based on the inclusion relationship of such frames f, logical frame structure 10 as shown in part (b) of Figure 1 is created. Whole motion video image 12 corresponds to root node (R) 15 of logical frame structure 10, and the divided and merged frame sequences 14 correspond to intermediate nodes 16 and leaf nodes 17. In addition, arc 13 expressed by the vertical neighborhood relationship of nodes represents a parent-child relationship of frames. For the frame sequence corresponding to each node of logical frame structure 10, one or more frames (rf) representing that frame sequence, or representative frame 18 is arbitrarily determined and still video image data thereof is created. By storing in each node of the logical frame structure the attribute data (At) 19 that is the retrieval item of a frame sequence along with the reference pointer to representative frame (rf), the motion video image information is completed.

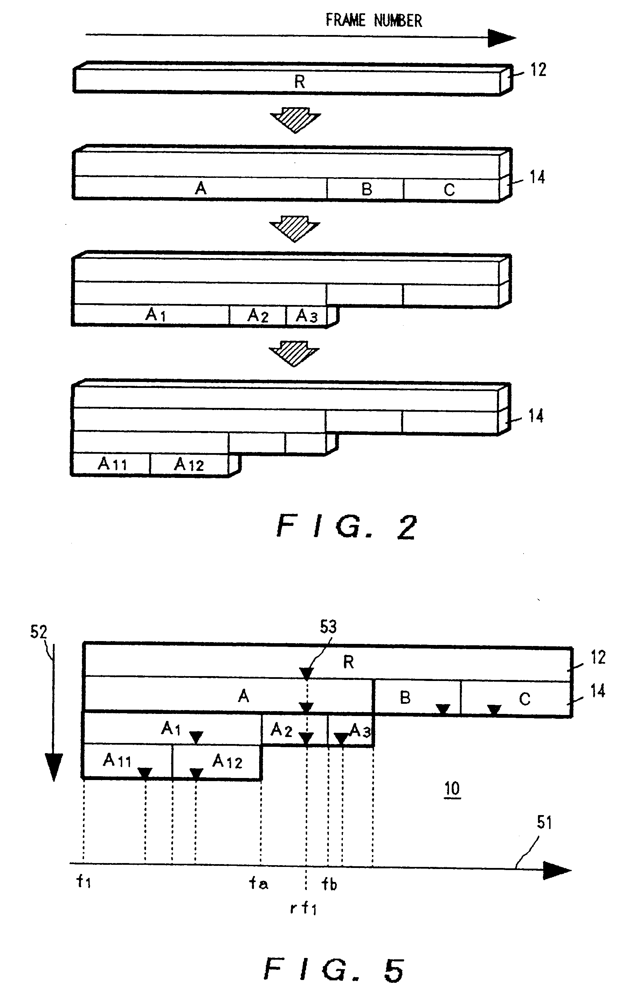

The logical frame structure automatically detects changes in frames f1 to fn in whole video image 12 and divides them into frame sequences 14 of minimum units such as A11 and A12, generating a logical frame structure of one hierarchy level as shown in part (a) of Figure 1. Then, from these frame sequences of minimum units, a user appropriately merges adjoining frame sequences that are associated in content, for instance, A1 from A11 and A12, thereby to create a logical frame structure of multiple hierarchical levels in a bottom-up fashion. Alternatively, as shown in Figure 2, a logical frame structure is created in a top-down fashion by dividing the stored whole motion video image 12 into arbitrary frame sequences 14, for instance, into A, B and C, and then on the judgement of the operator, subdividing each frame sequence into arbitrary frame sequences (for instance, A into A1, A2 and A3) of shorter time, and repeating this process. In any case, a logical frame structure 10 of multiple hierarchical levels is created for the frame sequences as edited (subdivided and merged again) by the user on the basis of the contents of the scenes.

Retrieval of a motion video image is performed using the motion video image information, on the basis of checking the attribute data 19 of nodes (15, 16, 17) in the logical frame structure 10 and node movement along arc 13. That is, as a retrieval condition, the condition for traversing the logical frame structure is specified, such as specifying the attribute data (At) of a frame sequence or searching the frame sequences corresponding to the nodes of parent, child and brother of the specified node in the logical frame structure 10. As a result of retrieval, representative frame 18 of the frame sequence and attribute data 19 are displayed, the motion video image is accessed for the frame sequences 14 selected by the user, and reproduction is performed.

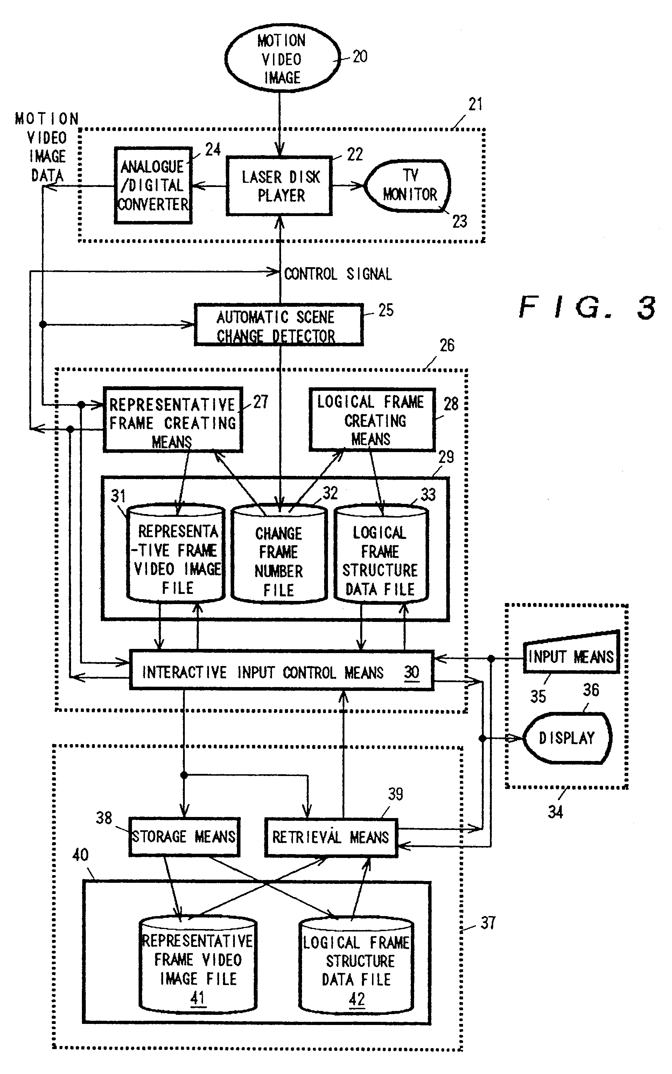

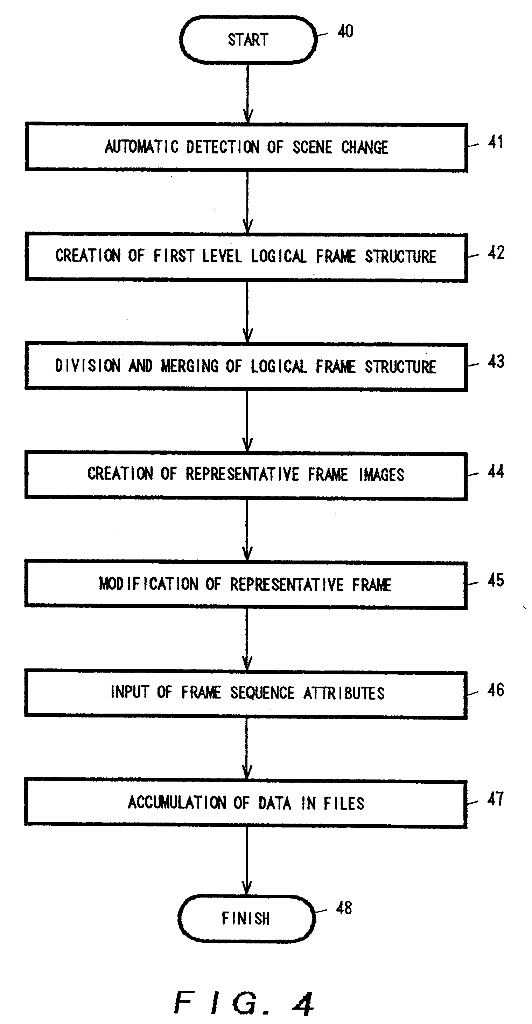

Figure 3 shows the bottom-up type motion video image management system of the preferred embodiment of the present invention. Motion video image 20 is stored as an analogue image in a recording medium such as a laser disk (hereinafter abbreviated as LD). A motion video image reproducing means 21 includes laser disk player (hereinafter LD player) 22, TV monitor 23 and analogue/digital converter 24. The system further includes an automatic scene change detector 25, and a retrieval information generating portion 26 for performing the generation of various information required for the retrieval management of the motion video image. It may be constructed either by dedicated hardware or by a combination of a personal computer and a program expressing the generation procedure (described later in Figure 4). Retrieval information generating portion 26 includes representative frame creating means 27, logical frame structure creating means 28, memory 29 and interactive input control means 30. Memory 29 has representative frame video image file 31, change frame number file 32 and logical frame structure data file 33.

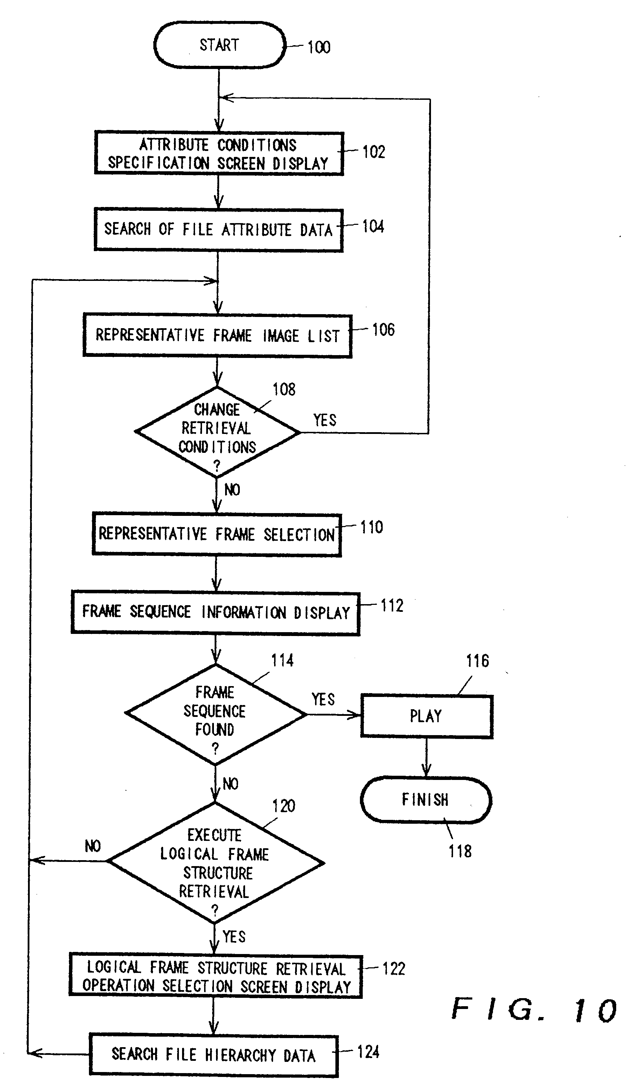

An interactive input means 34 is provided, and has input means 35 for characters and numeric values, such as a keyboard, mouse or touch panel, and a display 36. Further there is provided a retrieval portion 37, which may be configured either by dedicated hardware or by a combination of a host computer and a program expressing a retrieval procedure (described later in Figure 10). Retrieval portion 37 includes data storage means 38, retrieval means 39 and memory means 40, which includes representative frame video image file 41 and logical frame structure data file 42.

In the construction of Figure 3, automatic scene change detector 25 converts the analogue video image from LD player 22 to a digital video image by means of analogue/digital converter 24 to detect scene changes, and outputs a list of the frame numbers of frames f in which scene change has occurred, and this list is stored in change frame number file 32 of retrieval information generating portion 26. Representative frame creating means 27 determines representative frames (rf) 18 for the respective frame sequences determined from the frame number list, fetches the still frame video images of the representative frames from LD player 22 through analogue/digital converter 24, and creates and records a video image file in representative frame video image file 31. In addition, logical frame structure creating means 28 displays on display 36 the frame number list in change frame number file 32 and the still frame video image obtained from LD player 22, and based on the user input from input means 35, creates the logical frame structure 10 in which attribute information At for frame sequences is stored. The representative frame video images 18 are accumulated in representative frame video image file 31, and the logical frame structure 10 is accumulated in logical frame structure data file 33.

Now, for the frame sequences of the motion video image, an example of the procedure for accumulating data in memory 29 by means of the system of Figure 3 is described with reference to Figure 4. Firstly, at step 41, automatic scene change detector 25 detects scene change on the basis of a physical change or the like in the frames, and outputs the frame numbers of frames f which have changed to change frame number file 32. The publicly known technique shown in the above-mentioned "Interactive Natural Motion Video Image Editing Technique" written by Takafumi Miyatake, can be used as the automatic scene change detector 25, and thus detailed description thereof is omitted.

In step 42, logical frame structure creating means 28 calculates the start and end frame numbers of frame sequences 14 from the frame number list output by the automatic scene change detector 25. Using this, an initial logical frame structure 10 of one hierarchical level is created, with whole motion video image 12 being the parent node and with frame sequences 14 divided by automatic scene change detector 25 being the leaf nodes. At step 43, logical frame structure creating means 28 displays the initial logical frame structure 10 on display 36. The user instructs the editing (division and merge) operation of the logical frame structure 10 from alphanumeric input means 35, thereby modifying the construction of the initial logical frame structure 10 in order to construct a logical frame structure 10 of multiple levels.

Then, at step 44, representative frame creating means 27 determines the frame numbers of representative frames 18 for the respective frame sequences. The representative frame 18 is the frame at a predetermined position, for instance, the leading frame of a frame sequence, or a frame after a predetermined number of frames. For the determined frames rf, a motion video image is analogue/digital converted from LD 22 to create a still video image file. The representative frames automatically established in this step are modified as required in step 45. At this time, a frame which is newly determined to be a representative frame 18 is specified, for instance, by the user stopping the video image on TV monitor 23 at a particular frame.

At step 46, the user inputs values for attribute item 'At' describing the contents of the frame sequences, such as title and keywords for the frame sequences corresponding to the respective nodes of the logical frame structure 10. These attribute items are used as a key in retrieval. The attribute data 19 and representative frame video images 18 for the frame sequences created in the above steps are accumulated in files 31 and 32 of memory 29, in step 47.

In the above description, if the motion video image is stored as a digital video image, the process of converting an analogue motion video image to a digital motion video image can be omitted, and analogue/digital converter 24 and TV monitor 23 are obviated by displaying the motion video image on the display 36. Furthermore, this construction can be implemented by replacing personal computer 26 and host computer 37 with a plurality of workstations connected by a LAN.

The details of the creation and retrieval of motion video image information (representative frame video images and logical frame structures) accumulated in files 31 and 32 of memory 29 or files 41 and 42 of memory 40 will now be described.

Firstly, the structure of the files used for storing motion video image information in the preferred embodiment will be described, such as the logical frame structure 10 of the frame sequences 14 and representative frame video images 18 which are accumulated in memories 29 and 40 of the host.

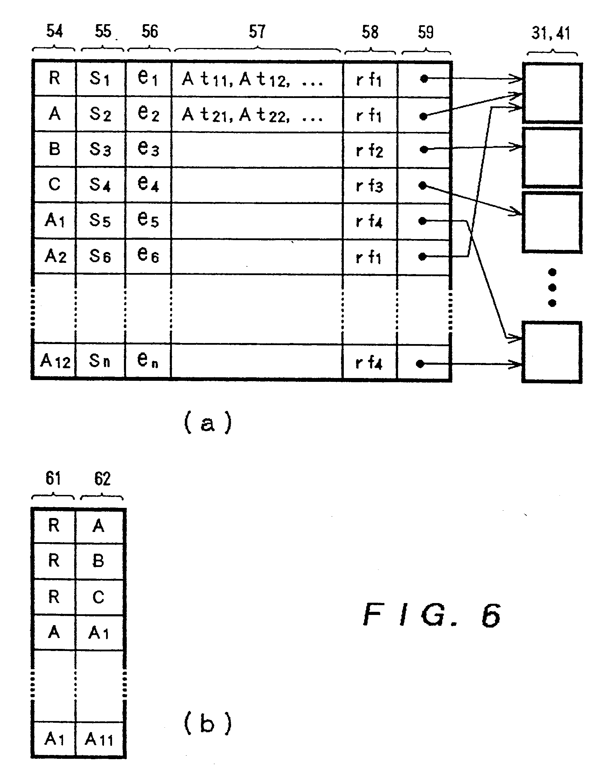

Figure 5 shows an example of the logical frame structure 10, with abscissa 51 as the frame number and with ordinate 52 as the depth of hierarchy. Whole motion video image 12 corresponds to root node (R) 15. Frame sequence A is divided at frames fa and fb and has child frame sequences A1, A2 and A3. Child frame sequence A1 further has grandchild frame sequences A11 and A12. In addition, the frame numbers of representative frames rf for the respective frame sequences are shown at the positions on axis 51 onto which mark 53 of representative frames rf is projected. For instance, the representative frames of R, A and A2 are all rf1.

Figure 6 shows an example of the file structure for storing such motion video image information. Part (a) shows the structure of logical frame structure data files (33, 42) for storing attribute data of frame sequences, and illustrates frame sequence identifier 54, start frame number 55 and end frame number 56 for the individual frame sequences 14 that are the nodes of the logical frame structure 10. Further, attribute items 57 (At11, At12, ...) describing at least one item or more of the details of title and keyword, frame number 58 of the representative frame, and reference pointer 59 of the representative frame to the still video image files (31, 41) are stored.

Assigned to frame sequence identifier 54 is, for instance, a value which uniquely identifies a frame sequence from a combination of start frame number 55 and end frame number 56. As to the hierarchical relationship of the frame sequences, a record in which parent frame sequence identifier 61 and child frame sequence identifier 62 are paired is stored in logical frame structure data files (33, 42), as shown in part (b) of Figure 6.

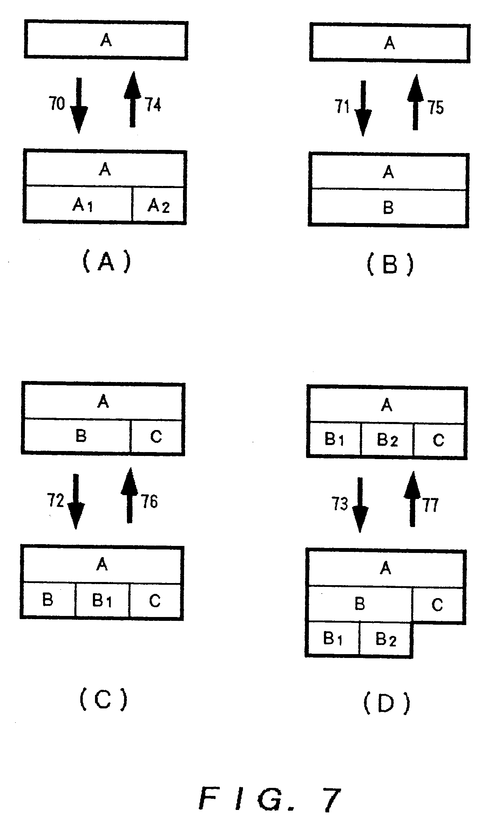

At step 43 of Figure 4, modification of the logical frame structure 10 is performed by the operation of dividing up a frame sequence to create child frame sequences and by the operation of merging two frame sequences to create a parent frame sequence. The operations specified therefor are: operation 70 (dividing frame sequence A to create child frame sequences A1 and A2 as shown in (A) of Figure 7); operation 71 (creating child frame sequence B with frame sequence A being the parent as shown in Figure 7(B); operation 72 (dividing frame sequence B to create brother frame sequences B and B1 as shown in Figure 7(C); and operation 73 (merging brother frame sequences B1 and B2 to create parent frame sequence B as shown in Figure 7(D). Alternatively, inverse operations 74 to 77, are specified. If a new frame sequence is created by dividing and merging these frame sequences, a record for that frame sequence is added to the file of Figure 6. In addition, if a new parent-child relationship is created by division of a frame sequence, then in data files (33, 42), the set of the identifiers of the parent and child is added to parent frame sequence identifier 61 and child frame sequence identifier 62.

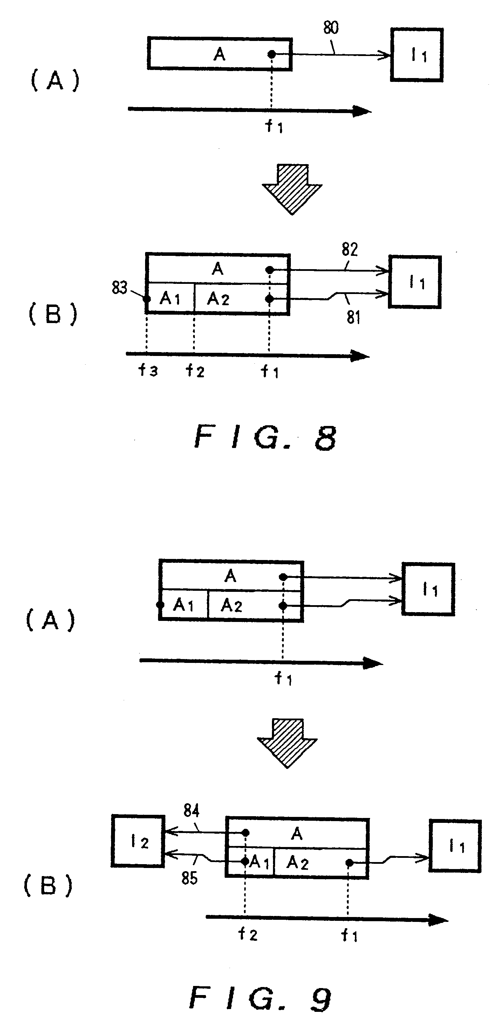

In the modification operation for the logical frame structure 10 shown in step 43 of Figure 4, the representative frame of the child frame which is newly created by dividing a frame sequence is automatically established on the basis of the representative frame of the parent frame. The example shown in Figure 8 shows the states before and after the representative frame numbers and pointers to the video image file are set for child frame sequences A1 and A2 created by division, when frame sequence A with frame f1 as its representative frame is divided at frame f2 (<f1). The representative frame f1 of the frame sequence A has reference pointer 80 to video image file I1. Since dividing frame f2 is of a frame number smaller than f1, the representative frame of A1 is leading frame f3, according to the default setting, and the representative frame of A2 is f1, the same as for A. In addition, pointer 81 of A2 to the video image file points to the same address as pointer 82 of A. An empty pointer 83 is assigned to A1, but when the video image file of frame f3 is created, the pointer is replaced by the address of the file. Conversely, if frame sequences A1 and A2 are merged into A, one of the respective representative frames of A1 and A2 which is selected by the user becomes the representative frame rf of A.

In step 45 of Figure 4, modification of the representative frame of a certain frame sequence affects both the parent frame sequence and the child frame sequences thereof along the hierarchy of frame sequences. The example of Figure 9 shows the states before and after the representative frame of a frame sequence having child frame sequences is changed. Since child frame sequence A1 of A contains frame f2 when representative frame f1 of frame sequence A is changed to f2 (<f1), the representative frame of A1 is also changed to f2 in connection with A. With this, pointer 85 of A1 to the video image file will point to the same address as pointer 84 of A. The change of the representative frame of the parent frame sequence similarly affects the child frame sequences up to the frame sequences that are the leaf nodes. Simultaneously, if the representative frame of the frame sequence which is the parent of A is contained in A, the change of the representative frame of frame sequence A affects the parent frame thereof. The change of the representative frame of a child frame sequence similarly affects the representative frame of the parent frame sequences thereof up to the frame sequences of the root node.

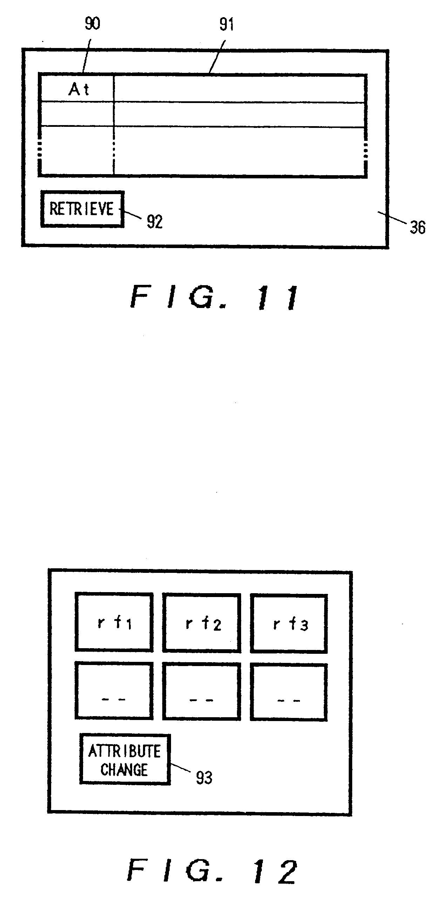

Retrieval processing using retrieval portion 37 is now described with reference to Figure 10 and the subsequent figures. In retrieval, a screen for specifying the retrieval conditions as shown in Figure 11 is firstly displayed on display means 36. The user inputs retrieval conditions for the motion video image information from input means 35 (step 102). That is, for each attribute item column 90 for a frame sequence which is desired to be retrieved, the user inputs values representing the respective retrieval conditions to condition specifying column 91, and then depresses retrieval executing button 92. Retrieval means 39 then performs a retrieval process for the file structure shown in Figure 6(a) that stores the attribute data and the like of the frame sequences held in files 41 and 42 of memory 40 in accordance with the retrieval conditions (step 104). As a result of the retrieval, retrieval means 39 outputs and displays the corresponding frame sequences on display 36. That is, as shown in the example screen of Figure 12, a video image list of the representative frames rf of the frame sequences corresponding to the retrieval conditions is displayed (step 106).

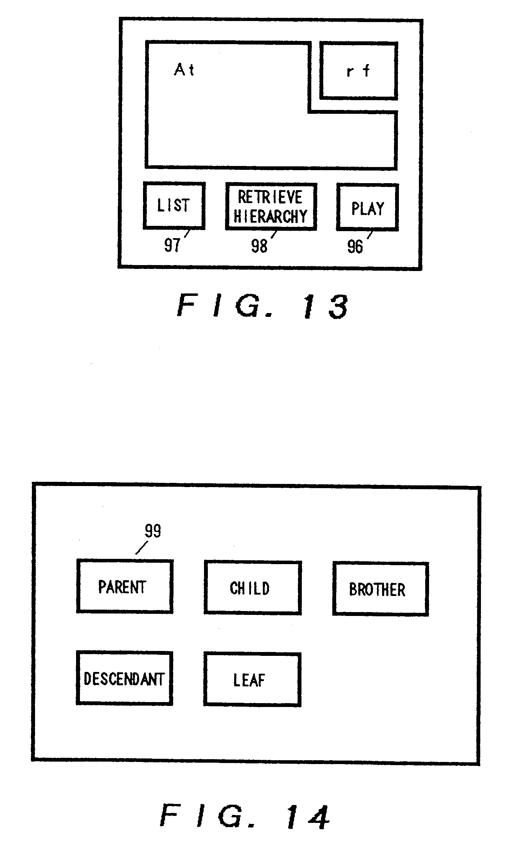

If the video image list does not contain a representative frame rf that is desired to be retrieved, the user can depress attribute change button 93 to return to the initial screen, or the screen for specifying the retrieval conditions (Figure 11) (step 108). If the representative frame rf that is desired to be retrieved is displayed in the representative frame list, then when that region is pointed to and selected (step 110), the attribute data At for the particular frame sequence is displayed along with representative frame video image rf as shown in the example screen of Figure 13 (step 112). If the frame sequence is found in the screen of Figure 13, then upon depression of play button 96 by the user, retrieval means 39 sends a control signal for playing the indicated frame sequence to LD player 22. LD player 22 sends the analogue video image stored in LD 20 to TV monitor 23 to play and display it (step 116). If the user wants to see another representative frame video image rf, he can return to the screen of the representative frame list (Figure 12) by means of list button 97 (step 120).

In addition, if hierarchy retrieval button 98 is depressed, selection buttons 99 (as shown in Figure 14) for retrieval operation along the logical frame structure 10 are displayed as a menu (step 122). The respective selection buttons 99 are to specify the operations for respectively retrieving frame sequences such as parent, child and brother frames on the basis of the frame sequence displayed in Figure 13. For retrieving a child frame sequence from a parent frame sequence, if the "child" selection button 99 is depressed, identifiers 62 are searched for from the identifiers 61 of the parent frame sequence side of file 42 to extract, for instance, child frame sequences A1, A2... for parent frame sequence A (step 124). If a grandchild sequence is requested, a search from parent to child frame sequences, namely from identifiers 61 to identifiers 62 is executed two times. If a "brother" frame sequence is requested, child frame sequences having the same parent frame sequence in identifiers 61 are searched for from identifiers 62. If "parent" is depressed to retrieve a parent frame sequence from a child frame sequence, identifiers 61 are searched for from the identifiers 62 of the child frame sequence side. The result of these retrievals is displayed as a screen of the representative frame list (Figure 12).

The top-down method depicted in Figure 2 can also be implemented by the system of Figure 3. However, in this case, the automatic scene change detector 25 and change frame number file 32 are unnecessary, and the user creates a logical frame structure 10 and representative frames 18 in an interactive manner using representative frame creating means 27, logical frame structure creating means 28 and interactive input/output means 34, and records and holds them in storage. The retrieval method is the same as that already described above.

Since this application can be implemented by any hardware combination of host computer, personal computer, video equipment, etc. and can apply to both digital and analogue video images, it has a wide range of application.

In accordance with the preferred embodiment of the present invention, where motion video image information is used to manage and retrieve a motion video image, a whole motion video image is hierarchically divided into frame sequences of shorter time according to the construction or the semantic contents thereof, and a logical frame structure 10 representing the hierarchical relationship, the attribute data of the frame sequences, and still video images of the representative frames are generated. By using such motion video image information as a retrieval key, any frame sequence can be randomly retrieved, or associated frame sequences can easily be accessed. By using this technique meaningful shorter scenes can be retrieved from a long sequence of motion video images in a short time.

## Claims

1. Apparatus for manipulating digital data relating to motion video images, the apparatus comprising storage means (22) for storing the motion video images, means (21) for reproducing the motion video images, and a digital data processing system having a motion video image information generating portion and an image retrieval portion (37); the data processing system being characterised in that the information generating portion comprises:
scene change detector (25) for receiving a digital representation of a motion video image as a series of frames and for detecting the frames at which changes in scenes occur so as to arrange the individual frames of said motion video image into frame sequences (14);
logical frame structure creating means (28) for determining the start and end frames of each frame sequence from the output of said scene change detector, and for creating a logical frame structure (10) containing digital data relating to the frame sequences (14);
a first digital data store (33) for storing the logical frame structure (10) in conjunction with attribute information;
representative frame creating means (27) for determining, for each frame sequence, a representative frame (18) of that frame sequence, and for retrieving the still video image data of the representative frame from the storage means (22); and
a second digital data store (31) for storing the still video image data in digital form.

2. Apparatus as claimed in Claim 1 wherein the changes in scenes detected by the scene change detector (25) are physical or semantic changes in the motion video image.

3. Apparatus as claimed in Claim 1 or Claim 2, further characterised in that the image retrieval portion (37) of the data processing system comprises:
a memory (40) for storing the frame sequences data, the still video image data of the representative frames (18), and the attribute information of the individual frame sequences; and
retrieval means (39) for retrieving a particular frame sequence from said memory (40) by the use of said attribute data and displaying the still video image of the representative frame for that particular frame sequence.

4. Apparatus as claimed in claim 3, wherein the memory (40) of said image retrieval portion (37) further includes the logical frame structure describing the logical structure of the individual frame sequences, and said retrieval means (39) extracts the particular frame sequence according to said logical frame structure data and the attribute information.

5. Apparatus as claimed in any preceding claim, further comprising an interactive input/output means (34) through which a user can enter into the data processing system the attribute information of each frame sequence, said logical frame structure creating means (28) representing the logical frame structure (10) on a display device (36) of said input/output means (34), whereby a user can divide or merge the frame sequences represented in the logical frame structure so as to alter the logical frame structure.

6. Apparatus as claimed in Claim 5, in which said retrieval means (39) displays frame sequences extracted from said memory (40) on said display device (36).

7. A method of manipulating digital data relating to motion video images in an apparatus comprising storage means (22) for storing the motion video images, means (21) for reproducing the motion video images, and a digital data processing system; the method comprising the steps of:
(a) entering a digital representation of the motion video image as a series of frames into the data processing system;
(b) detecting the frames at which changes in scenes occur so as to arrange the individual frames of said motion video image into frame sequences (14);
(c) determining the start and end frames of each frame sequence from the output of said detecting step;
(d) creating a logical frame structure (10) containing digital data relating to the frame sequences (14);
(e) storing the logical frame structure in conjunction with attribute information;
(f) determining, for each frame sequence, a representative frame (18) of that frame sequence;
(g) retrieving the still video image data of the representative frame from storage means (22); and
(h) storing the still video image data in digital form.

8. A method as claimed in Claim 7, wherein the individual frames of said motion video image are organized into the plurality of frame sequences on the basis of physical or semantic changes in the motion video image.

9. A method as claimed in Claim 7 or Claim 8, further comprising the steps of:
automatically organizing, at step (c), the individual frames of said motion video images into frame sequences according to an inclusion relationship;
displaying the organization of said frame sequences on a display device (36);
dividing and merging the frame sequences according to user input; and
creating, at step (d), the logical frame structure for said frame sequences based on the frame sequences as altered by the dividing and merging step.

10. A method as claimed in any of Claims 7, 8 or 9, further comprising the steps of:
entering into the data processing system a search request in the form of attribute data entered by a user;
retrieving a particular frame sequence including said attribute data from storage; and
displaying the still video image data of the representative frame of that frame sequence on a display device (36), the retrieval of the particular frame sequence being performed by the use of said logical frame structure data and said attribute data.

11. A method as claimed in Claim 10, comprising the further step of reproducing, at user request, the complete frame sequence represented by the still video image data on said motion video image reproducing means (21).
